# EUROPEAN PATENT APPLICATION

(11) **EP 2 551 778 A2**
(43) Date of publication of application: **30.01.2013**
(21) Application number: 12175792.6
(22) Date of filing: 10.07.2012
(51) Int. Cl.: G06F 13/42

(54) **Data transfer apparatus, image projection apparatus, and data transfer method**

(30) Priority: 26.07.2011 JP 2011163518
(71) Applicant: Ricoh Company, Ltd., Tokyo 143-8555 (JP)
(72) Inventor: Tsuji, Shigekazu, Ohta-ku, Tokyo 143-8555 (JP)
(74) Representative: Maury, Richard Philip

(57) **Abstract**

A data transfer apparatus (100) includes a serial interface controller (111) configured to perform data transfer between the data transfer apparatus (100) and a destination device (300) via a serial transmission line; and a transfer controller (113) configured to control the data transfer, issue a read request for data to the destination device (300), and resume issue of the read request after elapse of a given retransmission time when a positive acknowledgement in response to the read request is not received from the destination device (300) under a given condition.

## Description

### FIELD OF THE INVENTION

The present invention relates to a data transfer apparatus, an image projection apparatus, and a data transfer method.

### BACKGROUND OF THE INVENTION

A projector is allowed, by complying with On-The-Go that is a specification for interconnecting universal serial bus (USE) devices without intervention of a personal computer, to directly recognize a USB memory and to project video data in the USB memory. When a USB memory is connected, the projector performs a process to recognize the USB memory (enumeration). After the enumeration process is completed, a Test Unit Ready command to check whether the USB memory is available to respond is sent out from the projector that is a USB host to the USB memory that is a USB device. Some USB memories may take a time in units of seconds for an ACK response that is a response of success to the Test Unit Ready command.

The projector issues a read request packet (an IN token in bulk transport) and continues to issue an IN token repeatedly to stand by for a response from the USB memory until an ACK response is made from the USB memory.

However, a USB memory of slow response at start-up makes a negative acknowledgement (NAK) to indicate that it is not ready to respond to the IN token. The USB memory then sends out a positive acknowledgement (ACK) to the USB host (the projector) when it is ready. The information, such as issue of IN tokens, reception of NAK/ACK responses, and how many times the NAK responses are received successively, is controlled and managed by a USB host controller that is hardware for an embedded device in the projector.

When the projector successively receives NAKs the number of which reaches an upper limit of the maximum cumulative number of NAK reception times set in the USB host controller, the relevant read request results in an error. Accordingly, a retransmission process is carried out by a higher software layer that controls the USB host controller. When such a USB memory that takes time to respond to Test Unit Ready commands is connected to the projector, the recognition of the USB memory may be aborted depending on the performance and specification of the USB host controller. For example, assuming that a controller is capable of issuing IN tokens at the level of one microsecond intervals and the maximum cumulative number of NAK reception times set is 100,000 times, when an ACK response is not received within an extent of one second, the execution of a Test Unit Ready command fails and the projector may determine that the USB memory is not ready to respond and may stop recognizing the USB memory.

A case where the projector may stop recognizing a USB memory is described below. When NAK responses continue and an ACK response is not made within a time-out period of the projector for a command response, and the projector may end up stopping the recognition of the USB memory.

Accordingly, in the technology disclosed in Japanese Patent Application Laid-open No. 2010-026651, the optimization of the cumulative number of NAK responses is attempted, and thus the determination of an upper limit value and a lower limit value is carried out each time a response is received. The transfer in USB 2.0 specification is in the order of one microsecond and that in USB 3.0 specification is even faster at the level of one tenth of one microsecond. Therefore, performing such determination controls and register changes each time by software is inefficient. It is therefore preferable to implement such determination controls as hardware with an application specific integrated circuit (ASIC), as an example. However, in an embedded device such as a projector, a general-purpose USB host controller is often used in terms of product cost. Accordingly, when the maximum cumulative number of NAK reception times for a read request is reached, it is better to control a retransmission interval at a protocol layer of a higher rank than a driver layer, not changing the register setting by the driver layer of a low-rank that controls the register.

Furthermore, in the technology disclosed in Japanese Patent Application Laid-open No. 2005-122372, the retransmission interval of IN tokens after a NAK response is controlled. However, controlling the retransmission interval upon receiving a NAK response only once creates a vacant time until a subsequent IN token is issued, whereby efficiency of reading is deteriorated. As in the above-described control of the maximum cumulative number of NAK reception times, it is better to issue a certain number of IN tokens successively even when a NAK response is received in terms of efficiency of reading.

Therefore, there is a need for a data transfer apparatus, an image projection apparatus, and a data transfer method that can improve efficiency of reading data from a connected device.

### SUMMARY OF THE INVENTION

It is an object of the present invention to at least partially solve the problems in the conventional technology.

According to an embodiment, there is provided a data transfer apparatus that includes a serial interface controller configured to perform data transfer between the data transfer apparatus and a destination device via a serial transmission line; and a transfer controller configured to control the data transfer, issue a read request for data to the destination device, and resume issue of the read request after elapse of a given retransmission time when a positive acknowledgement in response to the read request is not received from the destination device under a given condition.

According to another embodiment, there is provided an image projection apparatus that includes a serial interface controller configured to perform data transfer between the image projection apparatus and a destination device via a serial transmission line; a transfer controller configured to control the data transfer, issue a read request for data to the destination device, and resume issue of the read request after elapse of a given retransmission time when a positive acknowledgement in response to the read request is not received from the destination device under a given condition; and a projection unit configured to project the data transferred from the destination device.

According to still another embodiment, there is provided a data transfer method performed in a data transfer apparatus that includes a serial interface controller configured to perform data transfer between the data transfer apparatus and a destination device via a serial transmission line. The data transfer method includes controlling the data transfer; issuing a read request for data to the destination device; and resuming issue of the read request after elapse of a given retransmission time when a positive acknowledgement in response to the read request is not received from the destination device under a given condition.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram schematically illustrating a configuration of a projector according to a first embodiment of the present invention;
FIG. 2 is a diagram illustrating an example of the projector connected to a personal computer;
FIG. 3 is a diagram illustrating an example of a universal serial bus (USB) memory connected to the projector;
FIG. 4 is a diagram illustrating a functional configuration and a layer structure of the projector in the first embodiment;
FIG. 5 is a diagram illustrating a display example of a video data list;
FIG. 6 is a sequence diagram for a data transfer process in the first embodiment; and
FIG. 7 is a sequence diagram for a data transfer process according to a second embodiment of the present invention.

### DETAILED DESCRIPTION OF THE PREFERRED EMBODIMENTS

With reference to the accompanying drawings, exemplary embodiments of a data transfer apparatus, an image projection apparatus, a data transfer method, and a computer program according to the present invention will be described in detail hereinafter.

### First Embodiment

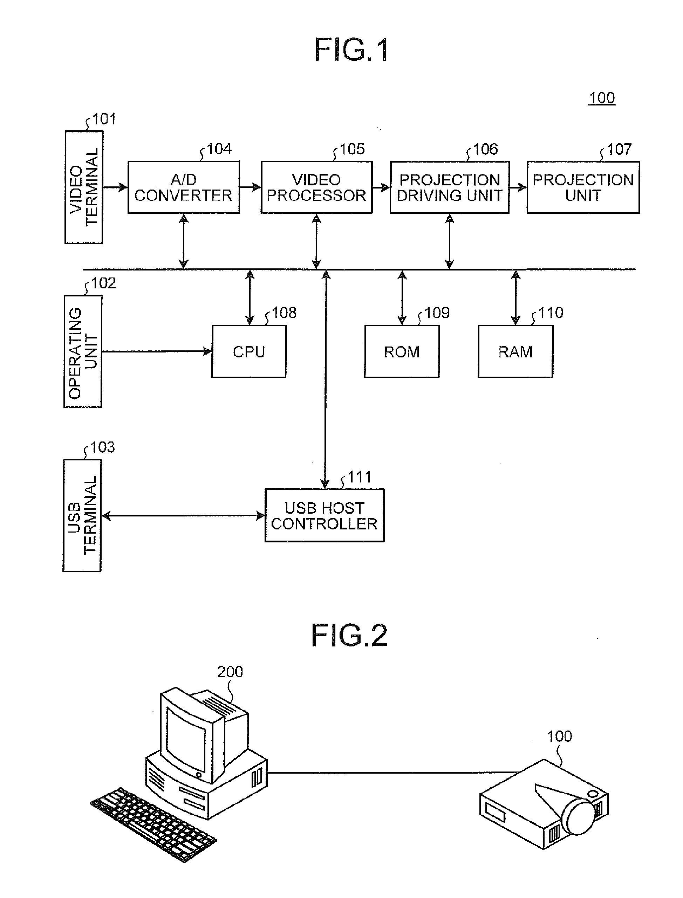

FIG. 1 is a block diagram illustrating a configuration of a projector according to a first embodiment. As illustrated in FIG. 1, a projector 100 as an image projection apparatus in the first embodiment primarily includes a video terminal 101, an operating unit 102, a universal serial bus (USB) terminal 103, an analog-digital (A/D) converter 104, a video processor 105, a projection driving unit 106, a projection unit 107, a central processing unit (CPU) 108, a read only memory (ROM) 109, a random access memory (RAM) 110, and a USB host controller 111.

The CPU 108 controls the A/D converter 104, the video processor 105, the projection driving unit 106, and the USB host controller 111 connected on a bus. The ROM 109 stores therein a control program that controls the projector 100 and a data transfer program, and the control program and the data transfer program are executed by the CPU 108. The RAM 110 is used as a work memory when the CPU 108 executes the control program and the data transfer program.

The A/D converter 104 converts an analog video signal received from the video terminal 101 into a digital video signal. The video processor 105 performs on the digital video signal various image processing such as contrast adjustment, brightness adjustment, sharpness adjustment, scaling process, and superposition of menu information (on screen display (OSD)).

The operating unit 102 receives various operations of a user. The projection driving unit 106 drives the projection unit 107. The projection unit 107 projects the video signal. The details of the projection driving unit 106 and the projection unit 107 are as follows. A projection method for the projector 100 includes a liquid crystal system and a digital light processing (DLP) system that uses a digital mirror device (DMD). The liquid crystal system is exemplified in the first embodiment. The projection unit 107 of a liquid crystal system is a liquid crystal panel that indicates the three primary colors: red (R), green (G), and blue (B). The projection driving unit 106 converts the video signal processed by the video processor 105 into video signals in RGB that drive the liquid crystal panel, i.e., the projection unit 107. The liquid crystal panel is disposed such that light emitted from a light source (not depicted) in the projector 100 is transmitted therethrough. An image is formed on the liquid crystal panel based on the video signal received, and the image is projected to the outside of the projector 100. The USB host controller 111 will be described later.

The projector 100 in the first embodiment, as illustrated in FIG. 2, can connect with a personal computer (PC) 200 to project video in the PC 200. In this case, the PC 200 is connected to the video terminal 101 of the projector 100 via a video cable, and a video signal from the PC 200 is received from the video terminal 101 and is projected through the A/D converter 104, the video processor 105, the projection driving unit 106, and the projection unit 107. When the PC 200 outputs a digital video signal, the A/D conversion process by the A/D converter 104 is not performed.

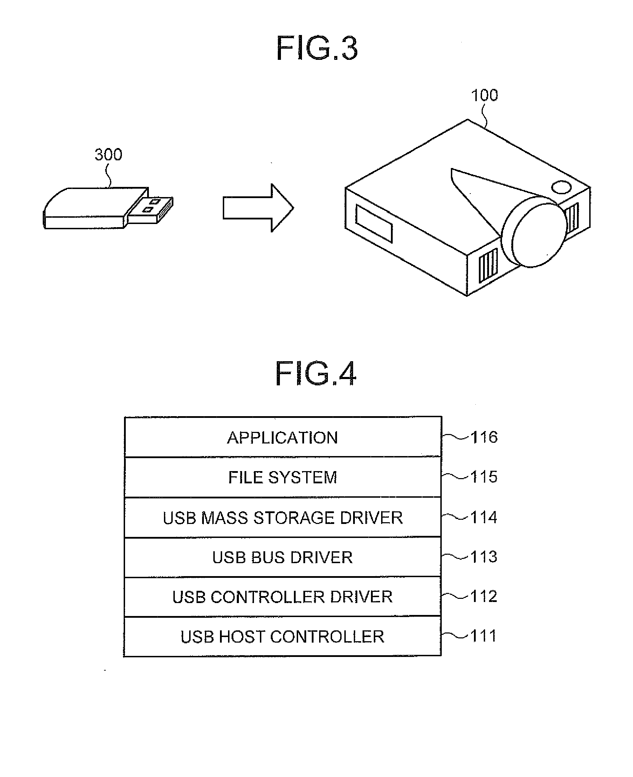

The projector 100 in the first embodiment, as illustrated in FIG. 3, can further project video data in a USB memory 300 by storing the video data to be projected, for example, still images or movies, in a storage device such as a USB memory 300 and connecting the USB memory 300 directly to the projector 100. In this case, the USB memory 300 is connected to the USB terminal 103 of the projector 100.

The projector 100 in the first embodiment has a function that complies with the On-The-Go specification of USB. More specifically, the projector 100 in the first embodiment serves as a USB host, and thus is capable of reading out the video data in the USB memory 300 that is a USB device.

FIG. 4 is a diagram illustrating a functional configuration and a layer structure of the projector 100 in the first embodiment. The projector 100 in the first embodiment, as illustrated in FIG. 4, primarily includes the above-described USB host controller 111 that is hardware, a USB controller driver 112, a USB bus driver 113, a USB mass storage driver 114, a file system 115, and an application 116.

The USB controller driver 112, the USB bus driver 113, the USB mass storage driver 114, the file system 115, and the application 116 are all software, and are in a layer structure arranged from lower to higher layers in this order.

The USB host controller 111 of the lowest layer serves as a serial interface controller, and detects the connection of the USB memory 300 that is a USB device connected to the USB terminal 103. The USB host controller 111 further issues, as instructed by the later described USB bus driver 113, an IN token that is a read request to a USB device and an OUT token that is a write request to the USB device.

The USB device makes an ACK response indicative of success when the USB device is available to respond and a NAK response indicative of failure when it is not available to respond to each token issued from the USB host controller 111.

The USB host controller 111 further includes an internal register. The maximum cumulative number of NAK reception times is set to the register. The maximum cumulative number of NAK reception times for an IN token that is a read request is the number of times of successive NAK responses by the USB device to notify a higher layer of the read request as an error.

The USB controller driver 112 controls the USB host controller 111. The USB controller driver 112 in the first embodiment sets the maximum cumulative number of NAK reception times to the register in the USB host controller 111 in a series of initial setting processes at the time of starting up the projector 100. The setting value of the maximum cumulative number of NAK reception times is not changed during the operation of read request.

The USB bus driver 113 serves as a transfer controller, and controls respective USB transport modes of control transport, interrupt transport, bulk transport, and isochronous transport.

The USB bus driver 113 gives instructions to the USB host controller 111 to issue a read request (IN token) for data to the USB memory 300 that is a USB device. Accordingly, the USB host controller 111 issues a read request (IN token) repeatedly.

When an ACK response corresponding to the read request is not received from the USB device (the USB memory 300) even after the read requests are issued for the maximum cumulative number of NAK reception times, the USB bus driver 113 does not notify a higher layer of an error, but stands by for a predetermined retransmission time to elapse. After the elapse of the retransmission time, the USB bus driver 113 gives instructions to the USB host controller 111 to resume the issue of a read request. Consequently, the issue of a read request from the USB host controller 111 is resumed after the elapse of the retransmission time even when NAK responses are received for the maximum cumulative number of NAK reception times. The retransmission time is stored in the register of the USB host controller 111 in advance. In the first embodiment, the retransmission time is not changed.

More specifically, to maintain the efficiency of reading video data in the USB memory 300 from the projector 100, the USB host controller 111 successively issues, by the control of the USB bus driver 113, an IN token that is a read request even when an ACK response from the USB memory 300 is not received until the maximum cumulative number of NAK reception times is reached. In data transfer, particularly, a situation of making an ACK response after a few times of NAK responses (a few microseconds to a few tens of microseconds) often occurs routinely and thus successive issue of IN tokens is effective.

In USB specifications, a plurality of USB devices can be connected on a USB bus. When a configuration of connecting a number of USB devices is considered, the number of IN tokens on the USB bus should be restricted. Therefore, in the first embodiment, when the NAK responses reach the maximum cumulative number of NAK reception times, the USB bus driver 113 performs control such that the retransmission of IN tokens to the USB memory 300 is carried out after the elapse of a retransmission time that is the time until a subsequent transmission of an IN token.

The USB mass storage driver 114 is a class driver in USB mass storage class, and reads/writes the USB memory 300 in units of sectors. The projector 100 in the first embodiment supports the USB mass storage class. The USB memory 300 also supports the USB mass storage class. Accordingly, when the USB memory 300 is connected to the projector 100, the projector 100 can recognize the USB memory 300 as a storage device and can handle video data in the USB memory 300 as file data.

The mass storage class mainly includes the CBI protocol that uses control transport, bulk transport, and interrupt transport in USB and the bulk-only protocol that is realized by bulk transport only. In the USB memory 300 that is a USB device, in general, the bulk-only protocol that can be configured with a less number of end points and can be realized at low cost is predominant.

The USB mass storage driver 114 in the first embodiment is able to support both the CBI protocol and the bulk-only protocol. However, as described above, because the bulk-only protocol is predominant in the USB memory 300, the USB memory 300 in the first embodiment is assumed to be of the bulk-only protocol. However, it is not restricted to the bulk-only protocol, and the CBI protocol can be adopted.

By adopting the bulk-only protocol, the USB host controller 111 and the USB controller driver 112 use bulk transport for a command to acquire a device status of the USB memory 300 and a command to acquire video data in the USB memory 300, i.e., a command that requests to read data successively.

The file system 115 recognizes the USB memory 300 as a file system because the USB memory 300 can be read/written in units of sectors by the USB mass storage driver 114.

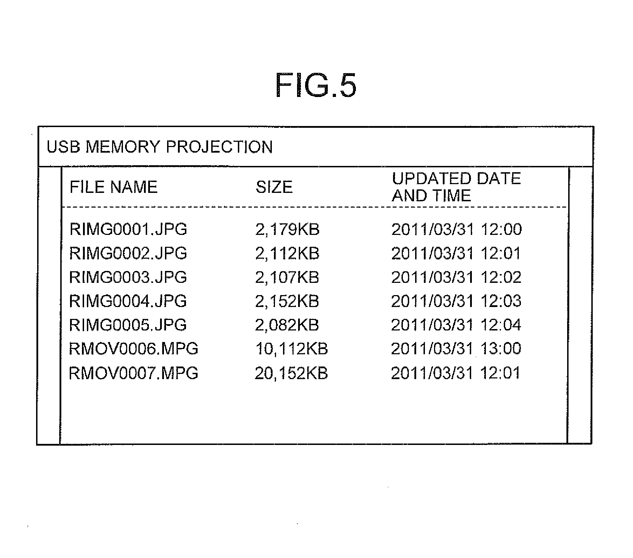

The application 116 controls the projection driving unit 106 to project file data supplied from the file system 115, i.e., the video data in the USB memory 300. The application 116 projects video data files in the USB memory 300 as a video data list illustrated in FIG. 5. The user selects the video data desired to be projected from the list of video data depicted in FIG. 5 through the operating unit 102. The application 116 reads out the video data selected by the user through the operating unit 102 from the USB memory 300 and performs a projection process of the video data.

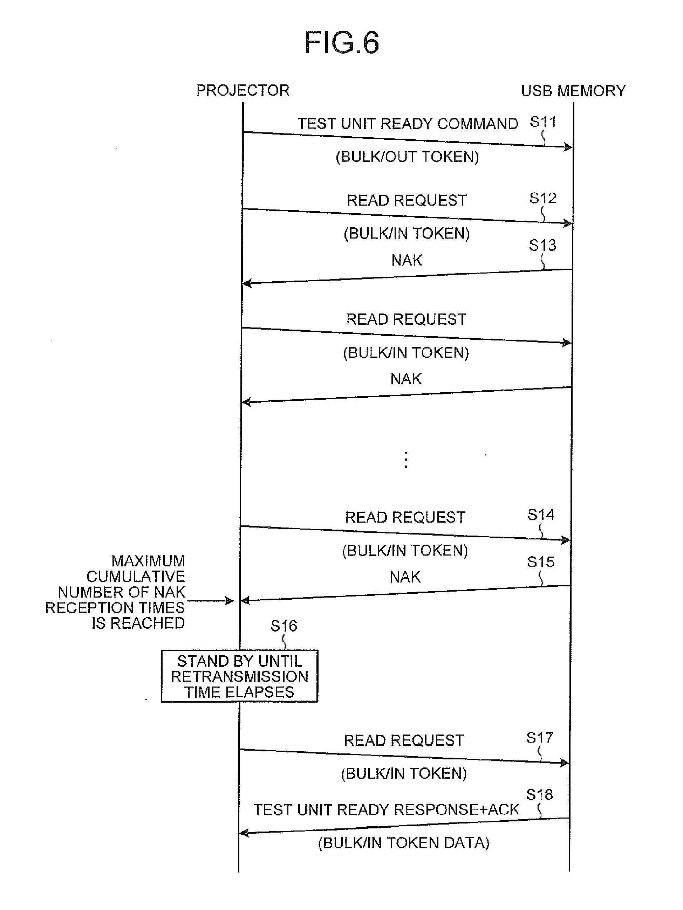

Next, a data transfer process between the projector 100 and the USB memory 300 thus configured in the first embodiment will be described. FIG. 6 is a sequence diagram of the data transfer process in the first embodiment. In FIG. 6, BULK in respective commands and responses means bulk transport.

The projector 100 first issues a Test Unit Ready command to the USB memory 300 using the USB host controller 111 (Step S11). The USB host controller 111 of the projector 100, by the instructions of the USB bus driver 113, then issues a read request (IN token) to the USB memory 300 (Step S12). In response to this, the USB memory 300 makes a NAK response to the projector 100 when the USB memory 300 is not ready (Step S13).

Such issue of a read request (IN token) from the projector 100 to the USB memory 300 is repeatedly carried out until an ACK response is made from the USB memory 300 (Steps S12, S13, S14, and S15). The USB bus driver 113 counts the number of NAK responses each time a NAK response is made.

When the number of NAK responses reaches the maximum cumulative number of NAK reception times set in the register of the USB host controller 111, the USB bus driver 113 then stands by until the retransmission time set in the register of the USB host controller 111 elapses without issuing a read request and without notifying a higher layer of an error (Step S16).

After the elapse of the retransmission time, the USB bus driver 113 then gives instructions to the USB host controller 111 to resume the issue of a read request (IN token) (Step S17). When an ACK response is received from the USB memory 300 (Step S18), the USB bus driver 113 determines that the connection with the USB memory 300 is successful and then ends the process.

In the first embodiment as described above, a read request for a USB device such as the USB memory 300 is repeatedly issued. Even when NAK responses reach the maximum cumulative number of NAK reception times, it is not regarded as an error and the issue of a read request to the USB device is resumed after the elapse of a retransmission time. Thus, the efficiency of reading data from the USB device can be improved.

Furthermore, assuming that the USB host controller 111 is capable of issuing read requests (IN tokens) at the level of one microsecond intervals and the maximum cumulative number of NAK reception times set is 100,000 times, when an ACK response is not received within an extent of one second, an error results. However, in the first embodiment, because the USB bus driver 113 of the protocol layer retransmits a read request, the command communication can be made successful even when an ACK response is not received for one second or longer. Moreover, providing a retransmission interval for a read request can achieve reduction in load on the USB bus due to excessive transmission of read requests (IN tokens).

### Second Embodiment

In the first embodiment, the retransmission time to stand by when NAK responses reach the maximum cumulative number of NAK reception times is fixed. However, in a second embodiment, the retransmission time is variable.

The hardware configuration and functional configuration of the projector 100 in the second embodiment are the same as those in the first embodiment described with reference to FIGS. 1 and 4. In the second embodiment, the function of the USB bus driver 113 differs from that in the first embodiment.

The USB bus driver 113 in the second embodiment repeats the issue of a read request until an ACK response is received after the issue of a read request is resumed by the USB host controller 111. When an ACK response is not received from the USB memory 300 even though the read requests are issued for the maximum cumulative number of NAK reception times, the USB bus driver 113 increases the retransmission time (sets a longer time than the retransmission time). With the USB memory 300 that requires a time in units of seconds for the ACK response at the time of command communication, it is preferable to extend the retransmission time rather than performing retransmission at a constant retransmission time. The USB bus driver 113 then controls the USB host controller 111 to resume the issue of a read request after the elapse of the increased retransmission time.

When an ACK response is received after issue of a read request is resumed, the USB bus driver 113 further sets the increased retransmission time, more specifically, the retransmission time at the time of reissue of the read request to which the ACK response is made, to the register of the USB host controller 111 as a new retransmission time.

The USB bus driver 113 can increase the retransmission time linearly, more specifically, in accordance with a direct function (linear function). Furthermore, as other methods to increase the retransmission time, the USB bus driver 113 may increase the retransmission time in accordance with a multi-degree function such as a quadratic function to extend the retransmission time at an accelerating rate.

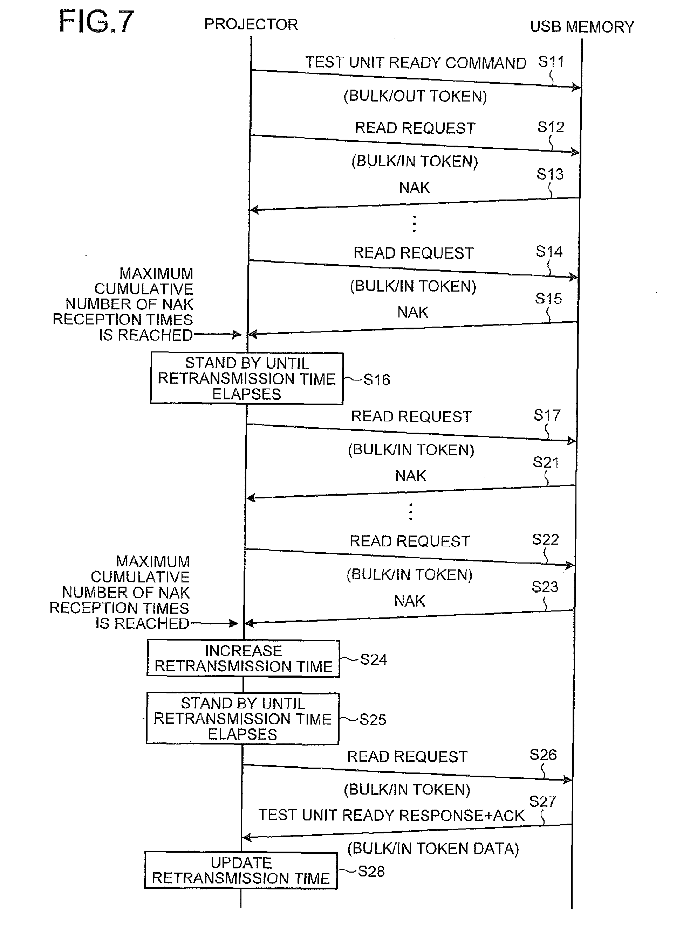

Next, a data transfer process between the projector 100 and the USB memory 300 thus configured in the second embodiment will be described. FIG. 7 is a sequence diagram of the data transfer process in the second embodiment.

The processes from issue of a Test Unit Ready command to standing by for the elapse of the retransmission time (Steps S11 to S16) are the same as those in the first embodiment. After the elapse of the retransmission time, the USB bus driver 113 instructs the USB host controller 111 to resume the issue of a read request (IN token) (Step S17). The issue of a read request (IN token) from the projector 100 to the USB memory 300 is repeatedly carried out until an ACK response is made from the USB memory 300 (Steps S17, S21, S22, and S23). The USB bus driver 113 counts the number of NAK responses each time a NAK response is made.

When the number of NAK responses reaches the maximum cumulative number of NAK reception times set in the register of the USB host controller 111, the USB bus driver 113 then increases the retransmission time (Step S24). The USB bus driver 113 then stands by until the increased retransmission time elapses without issuing a read request and without notifying a higher layer of an error (Step S25).

After the elapse of the retransmission time, the USB bus driver 113 then instructs the USB host controller 111 to resume the issue of a read request (IN token) (Step S26). When an ACK response is received from the USB memory 300 (Step S27), the USB bus driver 113 then sets the retransmission time increased at Step S24 to the retransmission time set in the register of the USB host controller 111 to update it (Step S28). Subsequently, the updated retransmission time is used.

In the second embodiment as described above, the retransmission time is updated with the increased retransmission time at the time of issue of the read request to which the ACK response is made. Thus, the efficiency of reading can be optimally maintained.

The data transfer program executed by the projector 100 in the first and the second embodiments is provided embedded in the ROM 109, as an example, in advance.

The data transfer program executed by the projector 100 in the first and the second embodiments may be configured to be provided in a file of an installable format or an executable format recorded on a computer readable recording medium such as a CD-ROM, a flexible disk (FD), a CD-R, and a digital versatile disk (DVD).

The data transfer program executed by the projector 100 in the first and the second embodiments may further be configured to be stored on a computer connected to a network such as the Internet and to be provided by downloading it via the network. The data transfer program executed by the projector 100 in the first and the second embodiments may further be configured to be provided or distributed via a network such as the Internet.

The data transfer program executed by the projector 100 in the first and the second embodiments is modularly configured to include the respective modules described above (the USB controller driver 112, the USB bus driver 113, the USB mass storage driver 114, the file system 115, and the application 116). As for the actual hardware, the CPU 108 reads out the data transfer program from the above-described ROM 109 and executes it to load the above-described modules into a main memory such as the RAM 110, whereby the USB controller driver 112, the USB bus driver 113, the USB mass storage driver 114, the file system 115, and the application 116 are generated on the main memory.

In the above-described embodiments, the projector is explained as an example to which the data transfer apparatus of the present invention is applied. However, the invention is not restricted to this, and the invention can be applied to any suitable apparatus that can serve as a USB host.

According to the embodiments, it is possible to provide an effect of increasing efficiency of reading data from a connected device.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A data transfer apparatus (100) comprising:
a serial interface controller (111) configured to perform data transfer between the data transfer apparatus (100) and a destination device (300) via a serial transmission line; and
a transfer controller (113) configured to control the data transfer, issue a read request for data to the destination device (300), and resume issue of the read request after elapse of a given retransmission time when a positive acknowledgement in response to the read request is not received from the destination device (300) under a given condition.

2. The data transfer apparatus (100) according to claim 1, wherein,
the transfer controller (113) repeats the issue of the read request until either the positive acknowledgement is received or the read requests are issued for a given maximum cumulative number of reception times as the given condition, and
when the read requests are issued for a given maximum cumulative number of reception times, the transfer controller (113) resumes the issue of the read request after the elapse of the retransmission time.

3. The data transfer apparatus (100) according to claim 2, wherein after the issue of the read request is resumed, the transfer controller (113) further repeats the issue of the read request until either the positive acknowledgement is received or the read requests are issued for a given maximum cumulative number of reception times,
when the further read requests are issued for the given maximum cumulative number of reception times, the transfer controller (113) resumes the issue of the read request after elapse of a longer time than the retransmission time.

4. The data transfer apparatus (100) according to claim 3, wherein the transfer controller (113) sets the longer time as the given retransmission time when the positive acknowledgement is received after the issue of the read request is resumed.

5. The data transfer apparatus (100) according to claim 3, wherein the transfer controller (113) obtains the longer time by increasing the given retransmission time in accordance with a linear function.

6. The data transfer apparatus (100) according to claim 3, wherein the transfer controller (113) obtains the longer time by increasing the given retransmission time in accordance with a multi-degree function.

7. An image projection apparatus comprising:
a serial interface controller (111) configured to perform data transfer between the image projection apparatus and a destination device (300) via a serial transmission line;
a transfer controller (113) configured to control the data transfer, issue a read request for data to the destination device (300), and resume issue of the read request after elapse of a given retransmission time when a positive acknowledgement in response to the read request is not received from the destination device (300) under a given condition; and
a projection unit configured to project the data transferred from the destination device (300).

8. A data transfer method performed in a data transfer apparatus (100) that includes a serial interface controller (111) configured to perform data transfer between the data transfer apparatus (100) and a destination device (300) via a serial transmission line, the data transfer method comprising:
controlling the data transfer;
issuing a read request for data to the destination device (300); and
resuming issue of the read request after elapse of a given retransmission time when a positive acknowledgement in response to the read request is not received from the destination device (300) under a given condition.
